# EUROPEAN PATENT APPLICATION

(11) **EP 4 671 594 A1**
(43) Date of publication of application: **31.12.2025**
(21) Application number: 23924125.0
(22) Date of filing: 09.06.2023
(51) Int. Cl.: F16L 59/147, F16L 11/04, F16L 59/075, F24F 1/34

(54) **METHOD FOR INSTALLING REFRIGERANT INSULATING STRUCTURE, AND MULTILAYER PIPE FOR REFRIGERANT**

(30) Priority: 22.02.2023 JP 2023026437
(71) Applicant: Showa Freezing Plant Co., Ltd., Kushiro-shi, Hokkaido 085-0022 (JP)
(72) Inventor: WAKAYAMA, Toshitsugi, Kushiro-shi, Hokkaido 085-0022 (JP); WAKAYAMA, Seiko, Kushiro-shi, Hokkaido 085-0022 (JP)
(74) Representative: Müller, Enno
(86) International application number: PCT/JP2023/021452
(87) International publication number: WO 2024/176480

(57) **Abstract**

The present invention provides an installation method of a heat-insulation structure for refrigerant that prevents occurrence of condensation in a gaseous body layer while the heat-insulation structure for refrigerant is provided with heat insulating effects by interposing the gaseous body layer between a heat insulator and a hose. Provided is an installation method of a heat-insulation structure for refrigerant pertaining to a pipe for refrigerant including a process of attaching a heat insulator to a refrigerant hose part including a refrigerant hose having flexibility so as to tubularly cover the refrigerant hose part, a process of injecting nitrogen gas into a gap formed between an outer circumferential surface of the refrigerant hose part and an inner circumferential surface of the heat insulator, and a process of sealing nitrogen gas remaining in the gap by bonding the refrigerant hose part and the heat insulator with a bonding adhesive at both end portions of the heat insulator.

## Description

### Technical field

The present invention relates to a heat-insulation structure of a refrigerant hose.

### Background art

A cooling device controls its cooling function by controlling the state of refrigerant. Therefore, for efficient device control, it is important to prevent the refrigerant from being affected by temperatures in an ambient environment as much as possible.

A metal tube or a hose mainly made of rubber is often used for a pipe to be used as a path of refrigerant in a cooling device. As a method for providing heat insulating effects to the pipe, there are methods such as a method used in a case using a metal tube in which the metal tube is covered with a heat insulator and a method used in a case using a hose in which the hose is provided with a multilayered structure by using a material having heat insulating effects.

For example, in Patent Document 1, a foam layer made of, for example, ethylene-propylene-diene rubber (EPDM) is arranged around a hose as a heat insulator to improve heat insulating effects.

In Patent Document 2, a cylindrical hose cover made of, for example, silicone rubber is provided around a hose to improve heat insulating effects.

In Patent Document 3, a multiunit tube is configured by providing a multilayered covering member around a tube main body, thereby improving heat insulating effects as a whole.

### Citation List

### Patent Literatures

Patent Literature 1: Japanese Patent Application Laid-open No. 2008-082476
Patent Literature 2: Japanese Patent Application Laid-open No. 2008-001044
Patent Literature 3: Japanese Patent Application Laid-open No. 2008-256015

### Summary of Invention

### Technical Problem

In these inventions, a member itself covering a hose has a heat insulating function, and its heat insulating effects are improved by creating an air layer between the member and the hose.

However, as the shift to environmentally friendly natural refrigerant is taking place, for example, when carbon dioxide is used as refrigerant, liquefied carbon dioxide at -40°C to -10°C below freezing flows as refrigerant inside a pipe. In such a usage environment, condensation easily occurs on an outer circumferential surface of the hose, and when heat insulating effects are realized by creating an air layer around the hose, condensation may also occur due to water vapor contained in the air layer.

When rubber is used for the hose, the rubber is deteriorated due to condensation, and covering the hose with water having a higher heat conductivity than that of air may result in reduction of heat insulating effects.

Even in a case where a heat insulator is brought into contact with and covers a hose without intending to create an air layer, due to a coarse outer circumferential surface of the hose, an air layer is created between the heat insulator and the hose, and condensation may occur accordingly.

Meanwhile, when a metal tube such as a steel tube is used for a pipe, there is a common practice that a heat insulator such as tubular urethane is attached to the metal tube in a close-contact manner to provide heat insulating effects.

A metal tube has a surface that is not coarse, so that the metal tube and the heat insulator come into close contact with each other and condensation is less likely to occur between them, and thus the metal tube can be protected from condensation by the heat insulator.

However, a pipe formed of metal tubes have the disadvantages that welding is needed at a connecting portion between the metal tubes, a piping work requires much effort and has a risk due to usage of fire, the number of pipe welding engineers is insufficient, and the number of transport service providers who transport straight tubes is also insufficient.

On the premise that a pipe for refrigerant is laid by using a hose that does not have defects of metal tubes but has flexibility to enable a manageable piping work suitable for the site, a hose that solves the problems described above has been desired.

An object of the present invention is to provide an installation method of a heat-insulation structure for refrigerant that prevents occurrence of condensation in a gaseous body layer while being provided with heat insulating effects by interposing the gaseous body layer between a heat insulator and a hose. Another object of the present invention is to provide a multilayered tube for refrigerant having the heat-insulation structure for refrigerant.

### Solution to Problem

In order to solve the above problems, the present invention provides the following configurations.
1) An aspect of the present invention provides an installation method of a heat-insulation structure for refrigerant pertaining to a pipe for refrigerant, the method comprising:
   a process of attaching a heat insulator to a refrigerant hose part including a refrigerant hose having flexibility so as to tubularly cover the refrigerant hose part;
   a process of injecting nitrogen gas into a gap formed between an outer circumferential surface of the refrigerant hose part and an inner circumferential surface of the heat insulator; and
   a process of sealing nitrogen gas remaining in the gap by bonding the refrigerant hose part and the heat insulator with a bonding adhesive at both end portions of the heat insulator.
2) In the above aspect,
   the installation method further comprises:
   a process of forming the refrigerant hose part so as to have a predetermined length by joining the refrigerant hoses by joints included in the refrigerant hose part; and
   in the process of attaching the heat insulator, a process of joining heat insulators adjacent to each other by bonding contact surfaces of the heat insulators with a bonding adhesive to have a length covering the refrigerant hose part.
3) In the above aspect,
   the installation method further comprises a process of bonding, at least at some of the joints, an inner surface of the heat insulator and the joints with a bonding adhesive.
4) In the above aspects,
   the installation method further comprises a process of pushing a ring to one end side of the heat insulator while the refrigerant hose part is inserted through the ring, where the ring has a hose hole that fits an outer circumferential surface of the refrigerant hose part and an outer diameter smaller than an outer diameter of the heat insulator, and includes a first opening penetrating from a first flat surface of the ring to an interior as a cavity of the ring and a plurality of second openings penetrating from the interior of the ring to a second flat surface that is opposed to the first flat surface, wherein
   the nitrogen gas is injected from the first opening to pass through the interior, and is injected into the gap through the second openings.
5) In the above aspects,
   the refrigerant hose part has pressure resistance and low-temperature resistance to resist usage of carbon dioxide as the refrigerant.
6) Another aspect of the present invention provides a multilayered tube for refrigerant in which refrigerant circulates in a cooling device, the multilayered tube for refrigerant comprises:
   a refrigerant hose part including a refrigerant hose having flexibility;
   a heat insulator attached so as to tubularly cover the refrigerant hose part; and
   a bonded portion where the refrigerant hose part and the heat insulator are bonded to each other with a bonding adhesive at both end portions of the heat insulator, wherein
   nitrogen gas is sealed in a gap between an outer circumferential surface of the refrigerant hose part and an inner circumferential surface of the heat insulator.
7) In the above aspect,
   the refrigerant hose part includes joints at its end portion.
8) In the above aspect,
   at least at some of the joints, an inner surface of the heat insulator and the joints are bonded to each other with a bonding adhesive.
9) In the above aspects,
   the refrigerant hose part has pressure resistance and low-temperature resistance to resist usage of carbon dioxide as the refrigerant.

### Advantageous Effects of Invention

The heat-insulation structure for refrigerant according to the present invention can prevent occurrence of condensation while improving heat insulating effects in a path of refrigerant.

### Brief Description of Drawings

Fig. 1 is an exemplary schematic configuration diagram pertaining to a cooling device in which a heat-insulation structure for refrigerant according to the present invention or a multilayered tube for refrigerant having the heat-insulation structure for refrigerant is installed.
Figs. 2 are external schematic views of the installed heat-insulation structure for refrigerant according to the present invention. Fig. 2(a) is a schematic perspective view when the heat-insulation structure for refrigerant is installed linearly, and Fig. 2(b) is a schematic plan view when the heat-insulation structure for refrigerant is installed as it is bent in a U-shape.
Fig. 3 is a schematic side view illustrating a state where a refrigerant hose part is tubularly covered by heat insulators.
Fig. 4(a) is a schematic sectional view in a region S1 in Fig. 3 in which the multilayered tube for refrigerant is cut in an extending direction of the refrigerant hose part. Fig. 4(b) is an A-A sectional view of Fig. 4(a). Fig. 4(c) is a schematic sectional view in which a region S2 in Fig. 4(a) is enlarged. Fig. 4(d) is a schematic side view corresponding to Fig. 4(a) when a surface of the refrigerant hose part and a heat insulator have a contact portion. Fig. 4(e) is a B-B sectional view of Fig. 4(d). Fig. 4(f) is a schematic sectional view in which a region S3 in Fig. 4(d) is enlarged.
Fig. 5(a) is a schematic exploded view of a periphery of joints of the heat-insulation structure for refrigerant according to the present invention or the multilayered tube for refrigerant having the heat-insulation structure for refrigerant. Fig. 5(b) illustrates another modification pertaining to the joints.
Figs. 6(a) to 6(d) are schematic side views explaining a manufacturing process of the multilayered tube for refrigerant in order.
Figs. 7(a) to 7(d) are schematic side views explaining joining of units pertaining to the multilayered tube for refrigerant.

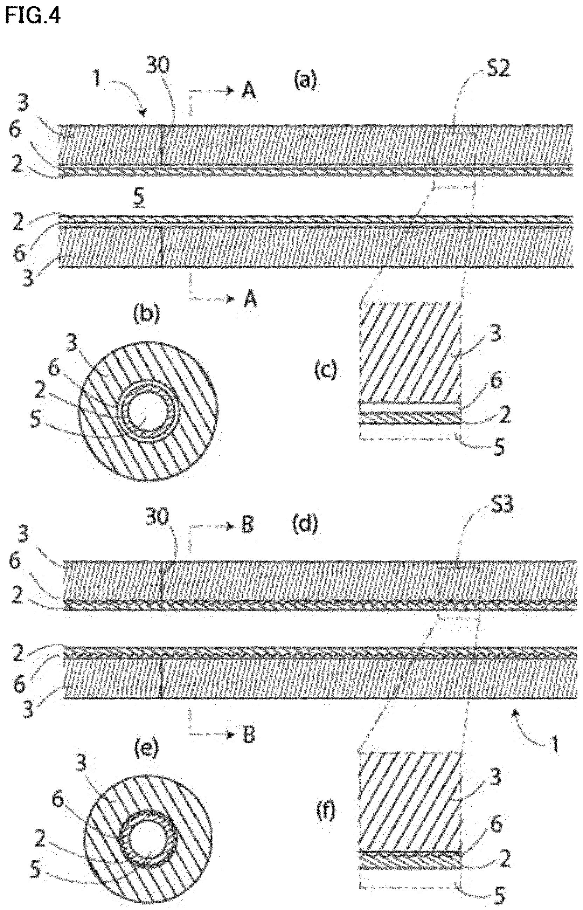

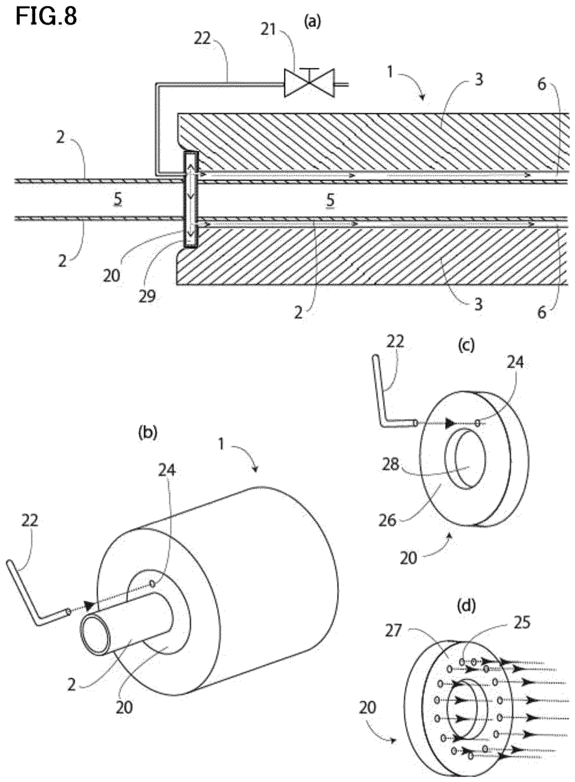

Figs. 8 are diagrams for explaining a ring used when nitrogen gas is injected into a gap of the heat-insulation structure for refrigerant according to the present invention. Fig. 8(a) is a schematic sectional view when nitrogen gas is injected using the ring as viewed from the same viewpoint of Fig. 4(a). Fig. 8(b) is a schematic perspective view illustrating a state where the ring is attached to one end of the heat-insulation structure for refrigerant according to the present invention. Fig. 8(c) is a schematic perspective view of the ring as viewed from an angle where one surface to which nitrogen gas is injected can be viewed. Fig. 8(d) is a schematic perspective view of the ring as viewed from an angle where a surface opposed to the one surface can be viewed.
Figs. 9(a) to 9(e) are schematic side views for explaining an installation method of the heat-insulation structure for refrigerant according to the present invention in order. Fig. 9(f) is a schematic diagram in which a region S4 in Fig. 9(d) is enlarged to illustrate a bonded portion used for sealing nitrogen gas injected into the gap.
Figs. 10(a) to 10(d) are schematic perspective views illustrating installation modes when the heat insulator has a back-split structure.
Figs. 11 are schematic perspective views pertaining to a modification of the multilayered tube for refrigerant. Fig. 11(a) illustrates an example in which joints are included, and Fig. 11(b) illustrates an example in which joints are not included.

### Description of Embodiments

The present invention relates to an installation method of a heat-insulation structure for refrigerant pertaining to a pipe for refrigerant to be used in a cooling device, and to a multilayered tube for refrigerant having the heat-insulation structure for refrigerant.

The heat-insulation structure for refrigerant according to the present invention represents a structure pertaining to a hose as a path of refrigerant, a heat insulating function, and a condensation preventing function. The multilayered tube for refrigerant represents a tube manufactured to have the heat-insulation structure for refrigerant.

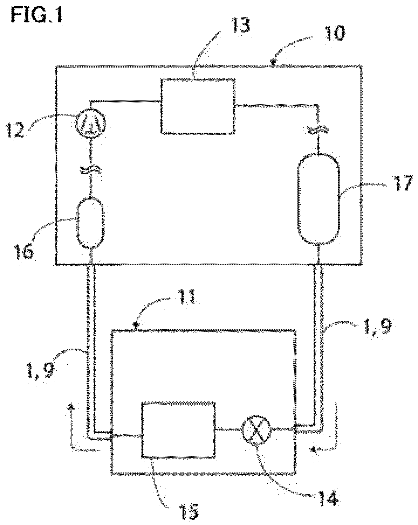

Fig. 1 illustrates a heat-pump-type cooling device as an example in a schematic configuration diagram as a cooling device in which a heat-insulation structure 1 for refrigerant according to the present invention or a multilayered tube 9 for refrigerant having the heat-insulation structure 1 for refrigerant is installed. This cooling device includes an indoor device 11 including an expansion valve 14 and an evaporator 15 and an outdoor device 10 including a compressor 12 and a condenser 13, and the heat-insulation structure 1 for refrigerant according to the present invention or the multilayered tube 9 for refrigerant having the heat-insulation structure 1 for refrigerant is installed in a pipe between the indoor device 11 and the outdoor device 10. It is assumed that the cooling device illustrated in Fig. 1 uses carbon dioxide as refrigerant and includes a CO₂ liquid receiver (CO₂ receiver) 17. The cooling device further includes a liquid separator 16 to prevent liquid refrigerant from entering the compressor.

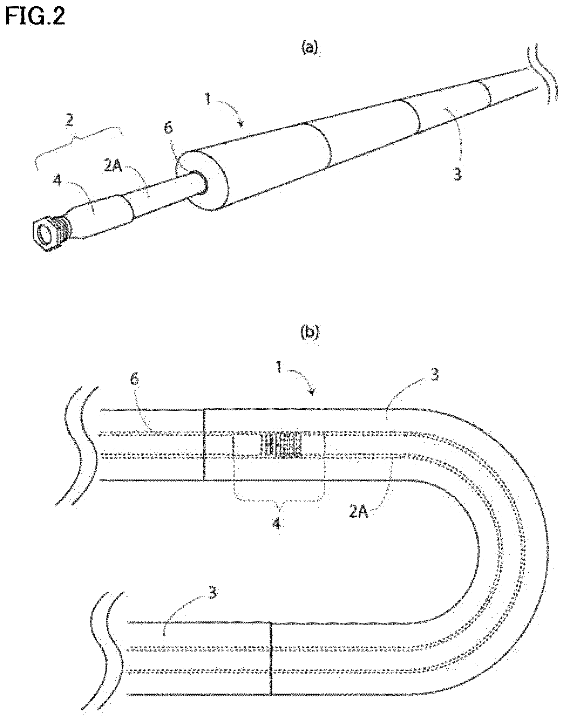

Fig. 2(a) is an external schematic view of the heat-insulation structure for refrigerant according to the present invention having been installed linearly.

The heat-insulation structure 1 for refrigerant according to the present invention and the multilayered tube 9 for refrigerant having the heat-insulation structure 1 for refrigerant include a refrigerant hose part 2, a heat insulator 3, and a gap 6 formed between the heat insulator 3 and the refrigerant hose part 2 as basic constituent elements. The refrigerant hose part 2 includes a refrigerant hose 2A. As illustrated in Figs. 2, the refrigerant hose part 2 may include a joint 4 at its end portion. The joint 4 is used to join refrigerant hoses 2A to each other so that the entire refrigerant hose part 2 has a predetermined length necessary for a pipe.

The refrigerant hose part 2 and the outdoor device 10 or the indoor device 11 in Fig. 1 may be connected by a joint conforming to the shape of a connecting part of the outdoor device 10 or the indoor device 11.

In recent years, the shift from fluorocarbon refrigerant to environmentally friendly natural refrigerant is taking place, and carbon dioxide is often used as refrigerant particularly in refrigeration and freezing facilities. Usage of carbon dioxide is preferable although the heat-insulation structure 1 for refrigerant or the multilayered tube 9 for refrigerant according to the present invention targets not only carbon dioxide as refrigerant. Carbon dioxide refrigerant is odorless and non-toxic and can realize relatively high energy efficiency. Since the amount of heat to be carried per unit volume is large, the pipe diameter can be made small and the refrigerant hose part 2 and eventually the heat-insulation structure 1 for refrigerant or the multilayered tube 9 for refrigerant can be reduced in diameter. As the diameter is reduced, it facilitates an installation work pertaining to pipes.

The refrigerant hose part 2, especially the refrigerant hose 2A, is required to have pressure resistance, low-temperature resistance, and flexibility.

Since carbon dioxide as refrigerant is used under a high pressure, the refrigerant hose 2A needs to be resistant to high pressure. Since liquefied carbon dioxide at -10°C to -40°C flows in a pipe for refrigerant using carbon dioxide, the refrigerant hose 2A needs to be resistant to such low temperatures without any deterioration. The refrigerant hose 2A not using any metal tube such as a steel tube has flexibility, and accordingly allows the refrigerant hose itself to be bent and enables flexible installation suitable for its installation site. This contributes to reduction of labor of the installation work.

Although there is no limitation on the material of the refrigerant hose 2A as long as it has pressure resistance, low-temperature resistance, and flexibility and functions as a path of refrigerant, synthetic rubber is assumed as its main material. The refrigerant hose 2A itself may have heat insulating effects.

Since the main material is rubber, the refrigerant hose 2A does not need to be welded when it is cut unlike a metal tube. This also significantly reduces the labor of the installation work.

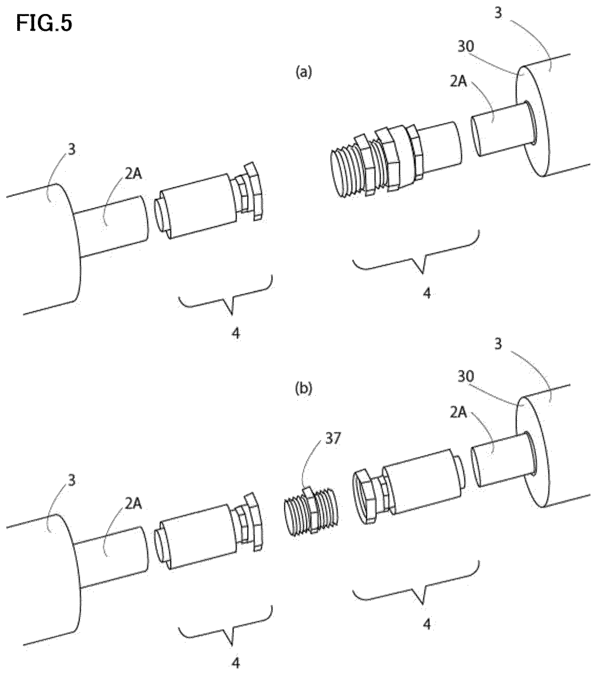

The refrigerant hose part 2 may include joints 4 for joining adjacent refrigerant hoses 2A to each other. Figs. 5(a) and 5(b) exemplarily illustrate schematic exploded views of a periphery of joints of the heat-insulation structure for refrigerant or the multilayered tube for refrigerant having the heat-insulation structure for refrigerant.

The joints 4 are required to join adjacent refrigerant hoses 2A to each other to allow passage of refrigerant passing through inside without any leakage. Further, each of the joints is a portion of the refrigerant hose part 2 and is tubularly covered by the heat insulator 3, so that the outer diameter of the entire joint 4 is preferably as close to the outer diameter of the refrigerant hose part 2 as possible. There is no significant limitation on the structure of the joints 4 as long as they meet the requirements described above.

The joints 4 exemplified in Figs. 5(a) and 5(b) are fixed by inserting the refrigerant hose 2A into the joints and pressure-bonding them at an overlapping portion. Refrigerant hoses 2A interposing the joints 4 are more firmly joined by a screwing method, for example.

For fixing the joints 4 to the refrigerant hose 2A, a bonding adhesive such as an epoxy-based adhesive agent may be used in combination.

Fig. 5(a) illustrates an example in which the refrigerant hose part 2 includes the joints 4, where the shape thereof is distinguished as a male or female shape. Fig. 5(b) illustrates a modification in which a mounting bracket 37 having a thread is interposed so that all the joints 4 have the same shape with a groove that engages with the thread. According to this modification related to the joint shape, refrigerant hoses 2A can be joined to each other without taking the direction of the refrigerant hose part 2 into consideration.

These joints may be used not only for joining the refrigerant hoses 2A to each other but also for connection to an outdoor device or an indoor device pertaining to a cooling device.

The heat insulator 3 is used for insulating the refrigerant hose part 2 from heat and eventually for preventing refrigerant from being affected by temperatures in an ambient environment, and from this viewpoint, the material of the heat insulator is selected. The material is also required to have flexibility to secure flexibility of the heat-insulation structure 1 for refrigerant or the multilayered tube 9 for refrigerant as a whole. It is preferable that the material has flexibility to the extent that a ring for nitrogen gas injection described later can be fitted thereon.

Further, it is preferable that the material substantially prevents permeation of inert gas such as nitrogen gas described later.

While there is no limitation on the material of the heat insulator 3 as long as it satisfies such requirements, for example, a rubber material, especially a rubber material having a closed-cell structure, can be used. For example, it is preferable to use Aeroflex (registered trademark) that is specialty elastomer (EPDM synthetic rubber system).

Since the heat insulator 3 tubularly covers the refrigerant hose part 2, the heat insulator 3 itself has a tubular columnar body as illustrated in Fig. 2(a). By inserting the refrigerant hose part 2 to inside of the heat insulator, the heat insulator 3 tubularly covers the refrigerant hose part 2.

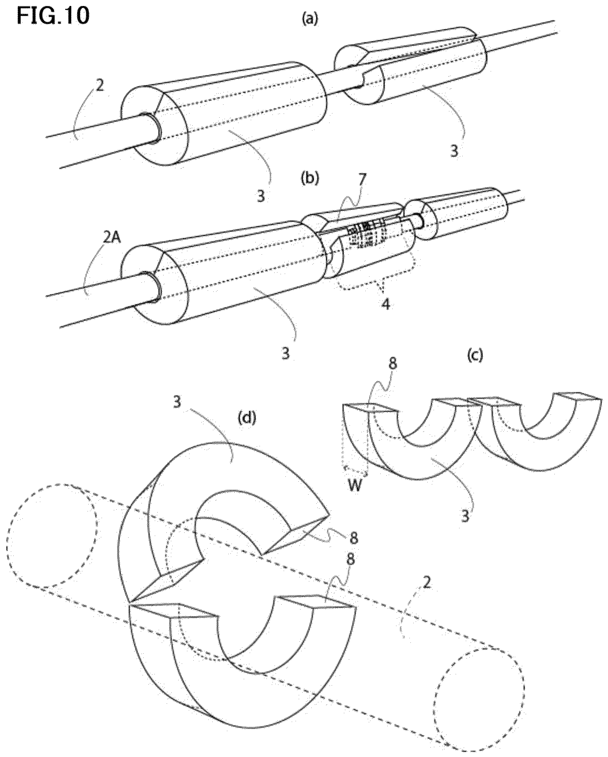

Since the heat insulator 3 is only required to tubularly cover the refrigerant hose part eventually, as illustrated in Figs. 10(a) and 10(b), the heat insulator 3 may have a back-split shape formed by being notched in the extending direction of the refrigerant hose part 2. In this case, by inserting the refrigerant hose part 2 from this notch so that the heat insulator 3 is wrapped around the refrigerant hose part 2, and by bonding back-split surfaces 7 opposed to each other with a bonding adhesive, the heat insulator 3 is formed into a tubular columnar body so that the refrigerant hose part 2 can be tubularly covered.

Further, as illustrated in Figs. 10(c) and 10(d), the heat insulator 3 may be halved so that one heat insulator is divided into two members in an initial state. In this case, by sandwiching the refrigerant hose part 2 by two members and bonding two opposed cut surfaces 8 to each other, the heat insulator 3 is formed into a tubular columnar body so that the refrigerant hose part 2 can be tubularly covered.

The bonding adhesive used on the back-split surfaces 7 and the cut surfaces 8 needs to be suitable for bonding of the material of the heat insulator 3 and to prevent nitrogen gas that is subsequently sealed inside the heat insulator 3 from leaking out.

When a tubular heat insulator 3 that is not split on its back or not cut is used, the heat insulator 3 covers the refrigerant hose part 2 by having the refrigerant hose part 2 inserted therein.

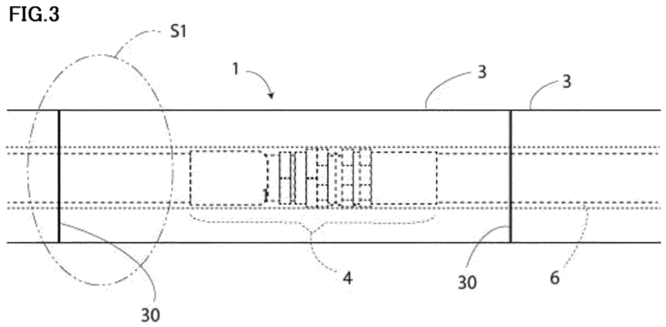

As illustrated in Figs. 2 and 3, the gap 6 is formed between the refrigerant hose part 2 and the heat insulator 3. In order to form the gap 6, the outer diameter of the refrigerant hose part 2 and the inner diameter of the heat insulator 3 are selected. An inert gas, mainly nitrogen gas, is injected into the gap 6. This injection is performed also to expel air containing moisture as well as to seal nitrogen gas in the gap 6.

Heat insulating effects are brought about by injecting nitrogen gas into the gap 6 and by interposing a layer of a gaseous body with a low heat conductivity in the heat-insulation structure 1 for refrigerant. The reason for using nitrogen gas instead of air is that, if air is used, condensation easily occurs due to moisture contained in the air. Prevention of condensation is important particularly for the refrigerant hose part 2 in which low-temperature refrigerant flows. This is because, for example, in a case using a refrigerant hose part 2 made of rubber, condensation results in deterioration of the rubber and a liquid with a heat conductivity relatively higher than that of gaseous bodies adheres to the refrigerant hose part 2, and this may cause reduction of the heat insulating effects.

While the inert gas to be injected is not limited to nitrogen as long as the objective of gas injection described above can be achieved, nitrogen is an inert gas and has advantages that it is harmless to humans even when it leaks from a multilayered tube for refrigerant and it causes no chemical reaction even when carbon dioxide leaks from the refrigerant hose part 2.

The gap 6 may be formed to be visually and clearly confirmed from the viewpoint in Fig. 4(b), or the outer circumferential surface of the refrigerant hose part 2 and the inner circumferential surface of the heat insulator 3 may be in contact with each other. As the outer circumferential surface of the refrigerant hose part 2 and the inner circumferential surface of the heat insulator 3 become closer to each other, the amount of nitrogen gas to be injected can be made relatively smaller. On the other hand, the thicker the layer of the gap 6 is, the higher the heat insulating effects are.

In a case where the outer diameter of the refrigerant hose 2A and the inner diameter of the heat insulator 3 are selected so that the heat insulator 3 and the refrigerant hose 2A comes into partial contact with each other, particularly a case where the outer circumferential surface of the refrigerant hose 2A is coarse, they are as illustrated in the sectional views in Figs. 4(d) to 4(f). Since it is preferable that nitrogen gas spreads throughout the gap 6, it is necessary to secure a path of the nitrogen gas. On the assumption that nitrogen gas has been injected from one side of the heat-insulation structure 1 for refrigerant, it looks there is no path of nitrogen gas at first glance in Figs. 4(d) and 4(f). However, from the viewpoint in Fig. 4(e), the gap 6 is formed as illustrated in the drawing and a path through which nitrogen gas passes in the left-right direction is secured from the viewpoint in Fig. 4(d).

An installation method of the heat-insulation structure 1 for refrigerant is described below.

In Fig. 3, a state where the refrigerant hose part 2 is tubularly covered by the heat insulators 3 is illustrated in a schematic side view. Regardless of whether the refrigerant hose part 2 includes the joints 4, it is preferable that the refrigerant hose part 2 is installed to be entirely covered by the heat insulators 3.

In order to eventually realize such a state of the pipe, cutting of the refrigerant hose 2A, joining of the refrigerant hoses 2A by the joints 4, cutting of the heat insulator 3, and joining of the heat insulators 3 may be required as appropriate.

When the length of the refrigerant hose part 2 is insufficient, it is joined to another refrigerant hose part 2 by the joints 4. Conversely, when the refrigerant hose part 2 is long, this length is adjusted by cutting the refrigerant hose 2A. A refrigerant hose 2A not made of a metal tube is easily cut and a cut portion thereof does not need to be welded, and it is only necessary to provide the joints 4 therefor.

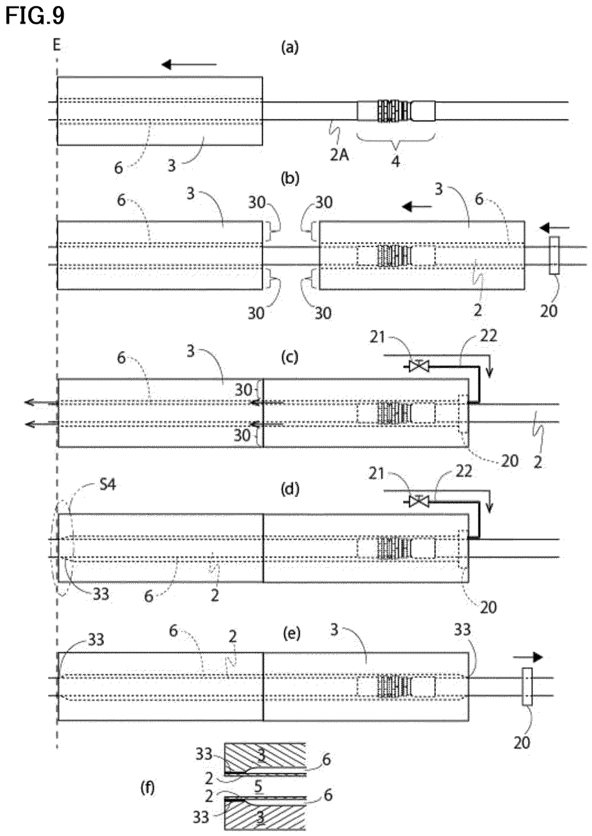

As for the heat insulator 3, its length can be also adjusted by cutting. Conversely, when the length of the heat insulator 3 is insufficient to tubularly cover the refrigerant hose part 2, adjacent heat insulators 3 can be joined to each other by bonding bonding surfaces 30 (see Fig. 9(b)) of the heat insulators 3 with a bonding adhesive.

The bonding adhesive used here needs to be suitable for bonding of the material of the heat insulator 3 and to prevent nitrogen gas that is subsequently sealed inside the heat insulator 3 from leaking out.

The installation method of the heat-insulation structure 1 for refrigerant is described with reference to Figs. 9.

For clarifying descriptions, it is assumed that the refrigerant hose part 2 is covered by the heat insulators 3 to a line E in Figs. 9.

As illustrated in Fig. 9(a), a heat insulator 3 having the refrigerant hose part 2 inserted therethrough is moved in the arrow direction to the line E.

To further cover the refrigerant hose part 2 by the heat insulator 3, another heat insulator 3 having the refrigerant hose part 2 inserted therethrough is moved in the arrow direction (Fig. 9(b)), and bonding surfaces 30 in contact with each other of the heat insulators 3 adjacent to each other are bonded with a bonding adhesive (Fig. 9(c)). Since only the bonding surfaces 30 are bonded to each other, in a section on the same plane as the bonding surfaces, gaps 6 formed between the respective heat insulators 3 and the refrigerant hose part 2 are communicated with each other as a space. The example illustrated in Fig. 3 shows a state where the refrigerant hose part 2 is inserted through three heat insulators 3 in the drawing, and even when the refrigerant hose part 2 has the joints 4, the gaps 6 are connected to each other inside the heat insulators 3 from the right to the left from the viewpoint in the drawing, and are spatially communicated with each other.

Further, a ring 20 is used for efficient injection of nitrogen gas into the gaps 6 (Fig. 9(b)).

This ring 20 has a tubular columnar body as illustrated in Fig. 8(c), and an interior 29 of the ring 20 is hollow as illustrated in Fig. 8(a). A first opening 24 is provided as a through hole from a first flat surface 26 viewable from the viewpoint in Fig. 8(c) to the hollow interior 29 of the ring 20. Further, a plurality of second openings 25 penetrating from the interior 29 to a second flat surface 27 that is opposed to the first flat surface 26 are provided.

As represented by the arrow in Fig. 8(c), a pipe 22 is inserted in the first opening 24, nitrogen gas enters the interior 29 through the pipe and is discharged from the interior 29 to the second openings 25, and then it is injected into the gap 6.

The ring 20 has a hose hole 28 as a hole penetrating through a central portion thereof to allow the refrigerant hose part 2 to be inserted (Fig. 8(c)). The hose hole 28 and the outer circumferential surface of the refrigerant hose part 2 need to fit each other so as to prevent the nitrogen gas injected into the gap 6 from leaking out through the hose hole 28.

In Fig. 8(d), the second openings 25 are opened to be annularly distributed coaxially with the hose hole 28; however, the second openings 25 are not limited to this form. Note that a plurality of holes uniformly distributed on the second flat surface are preferably opened so that nitrogen gas is efficiently injected into the gap 6.

As the flow of nitrogen gas, as represented by the arrow in Fig. 8(a), the inflow of the nitrogen gas is controlled by control of a valve 21 and the nitrogen gas enters the interior 29 of the ring 20 from the first opening 24 of the ring 20 through the pipe 22, and the nitrogen gas having spread throughout the interior 29 is injected into the gap 6 through the second openings 25.

As illustrated in Fig. 8(a), the ring 20 is pushed into the gap 6 at one end side of the heat insulator 3 while the refrigerant hose part 20 is inserted through the ring, so that the outer diameter of the ring 20 needs to be smaller than at least the outer diameter of the heat insulator 3. In order to facilitate the pushing-in, a notch may be provided at the one end side of the heat insulator 3; however, it is necessary to make sure that nitrogen gas injected into the gap 6 is prevented from leaking out from a portion between the heat insulator 3 and the ring 20 in the pushed-in state. It is not necessary to provide a notch when the heat insulator 3 is sufficiently flexible. The state where the ring 20 is pushed-in and installed is illustrated in a schematic perspective view of Fig. 8(b).

The ring 20 is a member for efficient injection of nitrogen gas into the gap 6, and as long as this objective is achieved, its structure is not limited to the structure described above; however, it is preferable that gas is injected into the gap 6 from one injection port through a plurality of outlets. It is also preferable that the ring 20 is press-fitted in the gap 6 so as not to come out from the gap 6 into which the ring 20 is pushed by a pressure applied at the time of injection. It is desirable that nitrogen gas does not leak out from a portion between the ring 20 in the pushed-in state and the heat insulator 3 or the refrigerant hose part 2.

As illustrated in Fig. 9(c), the ring 20 is pushed in from the right side to one end of the heat insulator 3 from the viewpoint in the drawing. The pipe 22 is inserted in the first opening while the nitrogen gas inflow is adjusted by the valve 21, and injection of the nitrogen gas is started.

As illustrated in Fig. 9(c), since gaps 6 formed between the respective heat insulators 3 and the refrigerant hose part 2 are communicated with each other as a space, nitrogen gas injected through the ring 20 moves to the left side from the viewpoint in the drawing. Accordingly, the air accumulated in the gaps 6 can be expelled.

Subsequently, as illustrated in Fig. 9(d), at a left end portion of the heat insulators 3 in the drawing, an inner circumferential surface of the heat insulator 3 and an outer circumferential surface of the refrigerant hose part 2 are bonded to each other with a bonding adhesive. Fig. 9(f) is a schematic sectional view of a region S4 in Fig. 9(d), and at the end portion of the heat insulator 3, the heat insulator 3 and the refrigerant hose part 2 are bonded to each other with a bonding adhesive to form a bonded portion 33. The entire shape of the heat insulators 3 is maintained due to the flexibility of the heat insulators 3.

As the heat-insulation structure 1 for refrigerant from the viewpoint in Figs. 9 is viewed from the left side, it can be confirmed that the annular gap 6 is closed with a bonding adhesive and the annular bonded portion 33 is formed.

The bonding adhesive used for bonding the bonded portion 33 needs to be suitable for bonding between the material of the elastic material 3 and the material of the refrigerant hose 2A or that of the joints 4 and to prevent nitrogen gas sealed in the gaps 6 from leaking out.

The nitrogen gas may be further injected in this state where the gap 6 at the left side in the drawing is closed (Fig. 9(d)).

Thereafter, as the ring 20 is removed, the heat insulators 3 is restored to their original shapes due to their elastic forces. Subsequently, at the right end portion in the drawing, the inner circumferential surface of the heat insulator 3 and the outer circumferential surface of the refrigerant hose part 2 are bonded to each other with a bonding adhesive. Accordingly, the nitrogen gas having been injected into the gaps 6 between two heat insulators 3 and the refrigerant hose part 2 is sealed (Fig. 9(e)).

When the refrigerant hose part 2 is inserted through the heat insulator 3 and the gap 6 into which nitrogen gas can be injected is formed between these elements, the refrigerant hose part 2 can be covered by the heat insulator 3 regardless of whether the joints 4 are provided. The heat insulators 3 adjacent to each other can be joined by bonding the bonded surfaces 30 with a bonding adhesive. The number of heat insulators 3 to be joined to one another can be determined in consideration of work efficiency, efficiency of nitrogen gas injection, and the like, and the number may be one. A bonded portion is provided at both end portions of each one disjoined heat insulator 3 or each two or more joined heat insulators 3, and nitrogen gas is sealed in the gap 6.

In the installation of this heat-insulation structure 1 for refrigerant, it is also possible that the refrigerant hose part 2 is covered by the heat insulator 3 in a mode in which the gap 6 is formed while at least some of the joints 4 are left uncovered, and thereafter the uncovered joints 4 are covered by another heat insulator 3.

When the heat insulator 3 is inserted from a free end of the refrigerant hose part 2 that is not connected to the outdoor device 10 or the indoor device 11 or is not joined to another refrigerant hose part 2, and the heat insulator 3 cannot be moved to a joint portion not covered by the heat insulator, a heat insulator 3 having been back-split as illustrated in Fig. 10(a) or having been cut as illustrated in Fig. 10(c) is used and wrapped around the joints 4 to cover the joints as illustrated in Fig. 10(b) or Fig. 10(d). At this time, the heat insulator 3 is attached to tubularly cover the joints 4 by bonding the back-split surfaces 7 or the cut surfaces 8 with a bonding adhesive.

When the joints 4 are covered later by another heat insulator 3, it is also permissible that an inner surface of the heat insulator 3 attached later to the joint 4 portion and the joint 4 portion is completely bonded to each other with a bonding adhesive so that the gap 6 is not formed. The bonded surface between the joints 4 and the heat insulator 3 bonded to each other in this way is defined as a joint bonded surface 35. Due to the joint bonded surface 35, there is no air layer between the heat insulator 3 and the joints 4, so that condensation does not occur.

It is preferable that no gap is formed between the heat insulator 3 attached later to the joint 4 portion and the heat insulator 3 attached previously. Contact surfaces in contact with each other of these heat insulators 3 may be bonded to each other with a bonding adhesive.

In the installation of the heat-insulation structure 1 for refrigerant, when only the back-split or cut heat insulator 3 is used in the installation of the heat-insulation structure 1 for refrigerant, it is also possible to start an operation to cover the refrigerant hose part 2 by the heat insulator 3 after installing the refrigerant hose part 2 such as connecting the refrigerant hose part 2 to the outdoor device 10 or the indoor device 11 is finished. That is, it is not necessary to leave an unconnected or disjoined free end of the refrigerant hose part 2 in order to insert it inside of the heat insulator 3.

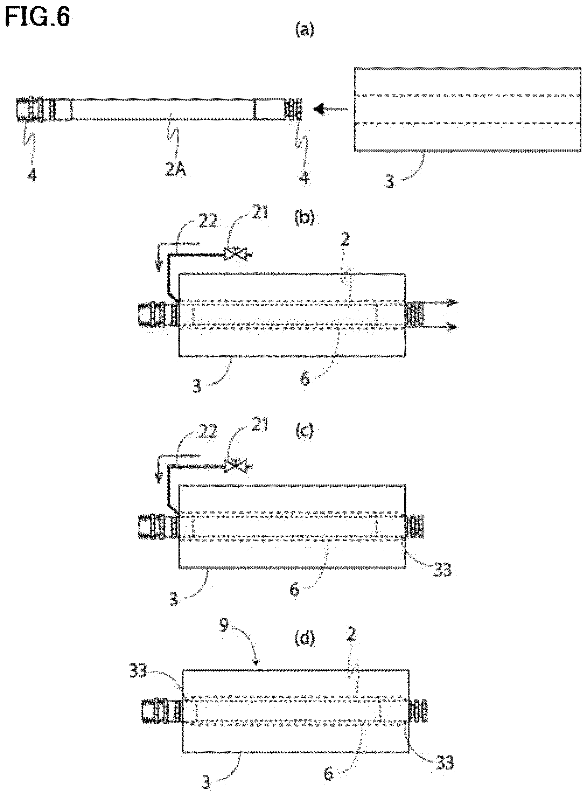

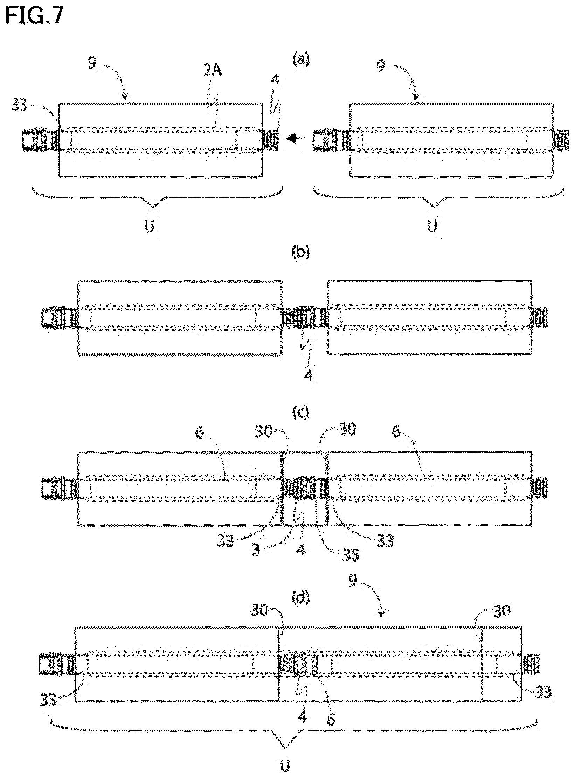

The multilayered tube 9 for refrigerant in which refrigerant circulates in a cooling device is described with reference to Figs. 6 and 7. The multilayered tube 9 for refrigerant has the heat-insulation structure 1 for refrigerant.

The multilayered tube 9 for refrigerant has a configuration in which the joints 4 are left at both sides of the heat insulator 3 without being covered by the heat insulators 3 and the entirety of this configuration is defined as one unit. A portion covered by the heat insulator has the heat-insulation structure 1 for refrigerant described above.

As illustrated in Fig. 7(d), the multilayered tube 9 for refrigerant may have a configuration in which a plurality of heat insulators 3 cover the refrigerant hose part 2 and the entirety of this configuration is defined as one unit. In this case, it is permissible that the gaps 6 inside the heat insulators 3 are not communicated with each other as a space. Each of the joints 4 may be interposed in the refrigerant hose part 2 at a portion sandwiched by joints 4 at both sides.

The multilayered tube 9 for refrigerant does not necessarily need the joints 4 and may have a configuration in which, for example, both end portions of the refrigerant hose 2A necessary for providing the joints 4 are not covered by the heat insulators 3 but are left as they are. Also in this case, the entirety of this configuration is defined as one unit.

Most of the descriptions of the manufacturing of the multilayered tube 9 for refrigerant are in common with the descriptions of the installation method of the heat-insulation structure 1 for refrigerant. The refrigerant hose part 2 is covered by the heat insulator 3 as illustrated in Fig. 6(a). While this drawing is an example in which the number of the heat insulator 3 necessary for the refrigerant hose part 2 is only one, when one heat insulator 3 is insufficient, a plurality of heat insulators 3 need to be joined.

After the refrigerant hose part 2 is inserted inside of the heat insulator 3, nitrogen gas is injected into the gap 6 formed between these elements to expel accumulated air (Fig. 6(b)). At one end portion on the side opposite to the side to which nitrogen gas is injected as illustrated in Fig. 6(c), an inner circumferential surface of the heat insulator and an outer circumferential surface of the refrigerant hose part 2 are bonded to each other with a bonding adhesive. Subsequently, nitrogen gas may be further injected.

Finally, at the other end portion of the heat insulator, the inner circumferential surface of the heat insulator and the outer circumferential surface of the refrigerant hose part 2 are bonded to each other with a bonding adhesive to seal residual nitrogen gas in the gap 6 (Fig. 6(d)).

As illustrated in Figs. 7(a) and 7(b), the multilayered tube 9 for refrigerant having the joints 4 can connect units to each other by the joints 4. This has advantages that, by bringing multilayered tubes 9 for refrigerant themselves to a piping work site, an operation to attach the heat insulator 3 and an operation to seal nitrogen gas at a portion covered by the heat insulator 3 become unnecessary.

The joints 4 not covered by the heat insulator are covered by using the heat insulator 3 that is back-split as illustrated in Fig. 10(a) or cut as illustrated in Fig. 10(c) by wrapping the heat insulator 3 around the joints 4 as illustrated in Fig. 10(b) or 10(d). At this time, the back-split surfaces 7 or the cut surfaces 8 are bonded to each other with a bonding adhesive so that the heat insulator 3 is attached to tubularly cover the joints.

It is preferable that no space is formed between the heat insulator 3 attached later to the joints 4 and the heat insulator 3 attached previously. Contact surfaces 30 in contact with each other of these heat insulators 3 may be bonded to each other with a bonding adhesive.

It is preferable that an inner surface of the heat insulator 3 attached later to the joint 4 portion and the joint 4 portion are completely bonded to each other with a bonding adhesive so that the gap 6 is not formed, thereby providing the joint bonded surface 35 (Fig. 7(c)). Due to the joint bonded surface 35, no air layer is formed between the heat insulator 3 and the joints 4 and condensation does not occur therebetween.

The state illustrated in Fig. 7(c) configured by coupling units and attaching the heat insulator 3 later to the joints 4 can be newly regarded as one unit of the multilayered tube for refrigerant.

The joints 4 provided at end portions of the refrigerant hose part 2 as one unit may be used not only for connection to another unit but also for connection to a cooling device such as the outdoor device 10 or the indoor device 11. In this case, each of the joints 4 and the cooling device can be connected via, for example, a mounting bracket for relaying a tip of a steel tube of the indoor device 10 or the like to each of the joints 4.

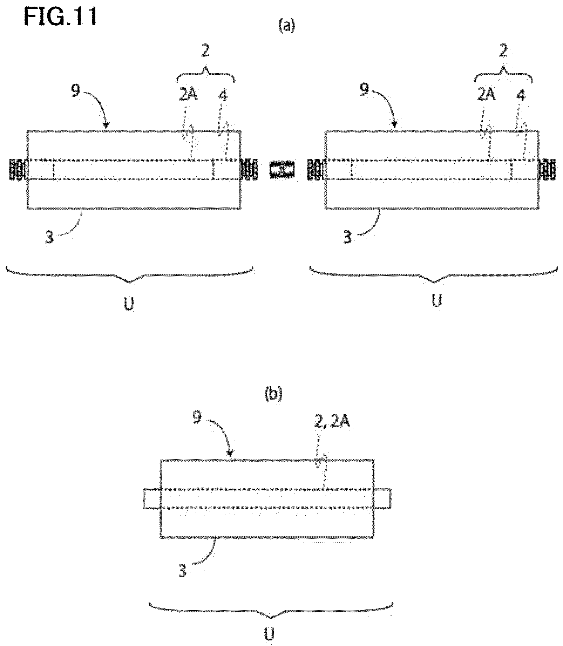

As illustrated in Figs. 11, in the multilayered tube 9 for refrigerant in which refrigerant circulates in a cooling device, it is possible that the heat insulator 3 is attached to the refrigerant hose part 2 so as to come into close contact with and tubularly cover the refrigerant hose part 2 so as to prevent the gap 6 from being formed between the inner circumferential surface of the heat insulator 3 and the outer circumferential surface of the refrigerant hose part 2.

While a bonding adhesive may be used between the inner circumferential surface of the heat insulator 3 and the outer circumferential surface of the refrigerant hose part 2, even when a bonding adhesive is not used, an elastic force of the heat insulator 3 is generated toward a central axis in the extending direction of the refrigerant hose part 2, so that the elastic body 3 and the refrigerant hose part 2 come into close contact with each other and are less likely to be displaced from each other.

Fig. 11(a) illustrates an example in which the refrigerant hose part 2 includes the refrigerant hose 2A and the joints 4 having the shape illustrated in Fig. 5(b). One unit of the multilayered tube 9 for refrigerant is connected to another one unit via the mounting bracket 37.

As illustrated in Fig. 11(b), the multilayered tube 9 for refrigerant does not necessarily need the joints 4 and may have a configuration in which, for example, both end portions of the refrigerant hose 2A necessary for providing the joints 4 are not covered by the heat insulators 3 but are left as they are. In this case, the entirety of this configuration is defined as one unit.

Descriptions of the joint 4 portion that can be covered later by the heat insulator 3 and other descriptions relating to the constituent elements are omitted since they are in common with the descriptions of the multilayered tube 9 for refrigerant having the gap 6 formed between the inner circumferential surface of the heat insulator 3 and the outer circumferential surface of the refrigerant hose part 2.

The entire structure of the heat-insulation structure 1 for refrigerant according to the present invention can be bent since both of the elastic body 3 and the refrigerant hose part 2 have flexibility and the gap 6 is a layer of nitrogen gas. The same applies to the multilayered tube 9 for refrigerant having the heat-insulation structure 1 for refrigerant. For example, bending in a U-shape as illustrated in Fig. 2(b) is also possible. In order for the heat-insulation structure 1 for refrigerant to exert certain heat insulating effects, the hose and the heat insulator thereof need to be bent at a certain curvature. The minimum bend radius thereof depends on the outer diameter and the like of the heat-insulation structure 1 for refrigerant.

When a bend of a pipe is created not by flexibility of the heat-insulation structure 1 for refrigerant but by the joints 4 of the refrigerant hose part 2, the back-split or cut heat insulator 3 described above is used to cover the joints 4. In order to prevent the gap 6 from being formed between the joints 4 and the heat insulator 3, the joints 4 and the heat insulator 3 are bonded to each other with a bonding adhesive to provide the joint bonded surface 35. With this configuration, condensation does not occur between the joints 4 and the heat insulator 3.

For example, approximately 20 meters of the refrigerant hose part 2 can be wound one turn and the refrigerant hose part 2 can be wound and transported. The length of a steel tube is set to be approximately 5 meters in consideration of its transportation. There are not many transport service providers who transport straight tubes, so that the heat-insulation structure 1 for refrigerant or the multilayered tube 9 for refrigerant according to the present invention using the refrigerant hose part 2 using a relatively small burden of transportation is advantageous. The burden of transportation can be reduced by delivering a standard product of the heat insulator 3 with a length of 2 meters, for example.

Particularly, in comparison with a metal tube, it is advantageous that the installation of the heat-insulation structure 1 for refrigerant or the manufacturing and installation of the multilayered tube 9 for refrigerant do not need welding. This involves no risk of fire, does not need any antiflaming curing work, and leads to reduction of carbon dioxide to be exhausted in a welding work, and is advantageous from the viewpoint of the current lack of pipe welding engineers.

Since the length of one turn can be set long, the number of joint portions is small and joining can be performed by interposing the joints 4, so that the work time can be shortened.

Also in a case of cutting for adjustment, welding is not necessary and only the joints 4 are used as necessary, so that the installation time and manufacturing time can be shortened.

The unnecessity of welding enables attachment of the heat insulator 3 to the refrigerant hose part 2 without taking a welding process or welding portions into consideration.

The installation method of the heat-insulation structure for refrigerant, the multilayered tube for refrigerant, and the like according to the present invention are not limited to the exemplary forms described above or the exemplary forms illustrated in the drawings, and include various modes such as various materials, the installation order, joining mode, sizes of the refrigerant hose part and the heat insulator, the way of covering the refrigerant hose part by the heat insulator, the degree of contact between the inner circumferential surface of the heat insulator and the outer circumferential surface of the refrigerant hose part, devices to be provided, and combinations with known and commonly used technologies.

### Reference Signs List

- 1: heat-insulation structure for refrigerant
- 2: refrigerant hose part
- 2A: refrigerant hose
- 3: heat insulator
- 4: joint
- 5: hose interior
- 6: gap
- 7: back-split surface
- 8: cut surface
- 9: multilayered tube for refrigerant
- 10: outdoor device
- 11: indoor device
- 12: compressor
- 13: condenser
- 14: expansion valve
- 15: evaporator
- 16: liquid separator
- 17: CO₂ liquid receiver
- 20: ring
- 21: valve
- 22: pipe
- 24: first opening
- 25: second opening
- 26: first flat surface
- 27: second flat surface
- 28: hose hole
- 29: interior
- 30: bonding surface
- 33: bonded portion
- 35: joint bonded surface
- 37: mounting bracket
- S: region
- W: width E line
- U: unit

## Claims

1. An installation method of a heat-insulation structure for refrigerant pertaining to a pipe for refrigerant, the method comprising:
a process of attaching a heat insulator to a refrigerant hose part including a refrigerant hose having flexibility so as to tubularly cover the refrigerant hose part;
a process of injecting nitrogen gas into a gap formed between an outer circumferential surface of the refrigerant hose part and an inner circumferential surface of the heat insulator; and
a process of sealing nitrogen gas remaining in the gap by bonding the refrigerant hose part and the heat insulator with a bonding adhesive at both end portions of the heat insulator.

2. The installation method according to claim 1, further comprising:
a process of forming the refrigerant hose part so as to have a predetermined length by joining the refrigerant hoses by joints included in the refrigerant hose part; and
in the process of attaching the heat insulator, a process of joining heat insulators adjacent to each other by bonding contact surfaces of the heat insulators with a bonding adhesive to have a length covering the refrigerant hose part.

3. The installation method according to claim 2, further comprising a process of bonding, at least at some of the joints, an inner surface of the heat insulator and the joints with a bonding adhesive.

4. The installation method according to any of claims 1 to 3, further comprising a process of pushing a ring to one end side of the heat insulator while the refrigerant hose part is inserted through the ring, where the ring has a hose hole that fits an outer circumferential surface of the refrigerant hose part and an outer diameter smaller than an outer diameter of the heat insulator, and includes a first opening penetrating from a first flat surface of the ring to an interior as a cavity of the ring and a plurality of second openings penetrating from the interior of the ring to a second flat surface that is opposed to the first flat surface, wherein
the nitrogen gas is injected from the first opening to pass through the interior, and is injected into the gap through the second openings.

5. The installation method according to any of claims 1 to 3, wherein the refrigerant hose part has pressure resistance and low-temperature resistance to resist usage of carbon dioxide as the refrigerant.

6. The installation method according to claim 4, wherein the refrigerant hose part has pressure resistance and low-temperature resistance to resist usage of carbon dioxide as the refrigerant.

7. A multilayered tube for refrigerant in which refrigerant circulates in a cooling device, the multilayered tube for refrigerant comprising:
a refrigerant hose part including a refrigerant hose having flexibility;
a heat insulator attached so as to tubularly cover the refrigerant hose part; and
a bonded portion where the refrigerant hose part and the heat insulator are bonded to each other with a bonding adhesive at both end portions of the heat insulator, wherein
nitrogen gas is sealed in a gap between an outer circumferential surface of the refrigerant hose part and an inner circumferential surface of the heat insulator.

8. The multilayered tube for refrigerant according to claim 7, wherein the refrigerant hose part includes joints at its end portion.

9. The multilayered tube for refrigerant according to claim 8, wherein at least at some of the joints, an inner surface of the heat insulator and the joints are bonded to each other with a bonding adhesive.

10. The multilayered tube for refrigerant according to any of claims 7 to 9, wherein the refrigerant hose part has pressure resistance and low-temperature resistance to resist usage of carbon dioxide as the refrigerant.
